# EUROPEAN PATENT SPECIFICATION

(11) **EP 2 879 210 B1**
(45) Date of publication and mention of the grant of the patent: **15.01.2020**
(21) Application number: 14825240.6
(22) Date of filing: 30.09.2014
(51) Int. Cl.: H01M 4/131, H01M 4/36, H01M 4/48, H01M 4/62, C07F 5/06, C07F 7/00, C07F 13/00, C01G 53/00, H01M 4/04, H01M 4/1391, H01M 4/505, H01M 4/525, H01M 10/052

(54) **CATHODE ACTIVE MATERIAL COATING SOLUTION FOR SECONDARY BATTERY AND METHOD FOR PREPARING SAME**
BESCHICHTUNGSLÖSUNG MIT EINEM KATHODENAKTIVMATERIAL FÜR EINE SEKUNDÄRBATTERIE UND VERFAHREN ZUR HERSTELLUNG DAVON
SOLUTION DE REVÊTEMENT DE MATÉRIAU ACTIF DE CATHODE POUR BATTERIE SECONDAIRE ET SON PROCÉDÉ DE PRÉPARATION

(30) Priority: 30.09.2013 KR 20130117032; 29.09.2014 KR 20140130375
(43) Date of publication of application: 03.06.2015
(73) Proprietor: LG Chem, Ltd., Seoul 150-721 (KR)
(72) Inventor: LEE, Dong Kwon, Daejeon 305-738 (KR); CHO, Seung Beom, Daejeon 305-738 (KR); NHO, Jun Seok, Daejeon 305-738 (KR); JANG, Wook, Daejeon 305-738 (KR)
(74) Representative: Goddar, Heinz J.
(86) International application number: PCT/KR2014/009194
(87) International publication number: WO 2015/047024

(56) References cited:
- WO-A1-2013/064773
- KR-A- 19990 073 753
- KR-A- 20010 029 695
- KR-A- 20080 099 131
- KR-A- 20090 093 165
- KR-A- 20110 017 253
- KR-A- 20120 021 674
- US-A- 6 110 442
- US-A1- 2009 004 563
- US-A1- 2012 326 078
- US-A1- 2013 149 227
- US-A1- 2013 149 616
- US-A1- 2013 236 788

## Description

### TECHNICAL FIELD

The present invention relates to a cathode active material coating solution for a secondary battery for preparing a cathode active material for a secondary battery having improved thermal stability and capacity characteristics, and a method of manufacturing the cathode active material coating solution.

### BACKGROUND ART

In line with the increasing use of mobile devices and vehicles, demand for secondary batteries as their energy sources has been rapidly increased. As the secondary batteries, lithium secondary batteries having high energy density, high voltage, long cycle life, and low self-discharging rate have been commercialized and widely used.

A lithium secondary battery may be largely composed of a cathode active material, an anode active material, a separator, and an electrolyte. Specifically, a carbon material has been used as a main component of the anode active material, and in addition, research into using lithium metal, a sulfur compound, a silicon compound, and a tin compound has been actively conducted. Also, a layered structure, lithium-containing cobalt oxide (LiCoO₂) has been mainly used as the cathode active material, and in addition, lithium metal compounds having a layered structure (the metal includes manganese, cobalt, nickel, etc.), lithium-containing manganese oxides having a spinel structure (LiMnO₂ and LiMn₂O₄), and lithium-containing nickel oxide (LiNiO₂) have been commercialized.

With respect to LiCoO₂ which has currently been most widely used among the above cathode active materials due to excellent life characteristics and charge and discharge efficiency, it has limitations in being applied to high-capacity batteries for electric vehicles due to the fact that it has low structural stability, has high raw material costs, and causes environmental pollution. With respect to a lithium manganese oxide, such as LiMnO₂ and LiMn₂O₄, studied as an alternative material of LiCoO₂, it has high thermal stability and is inexpensive, but has disadvantages in that electrical conductivity is low, capacity is low, and electrode degradation rapidly occurs at high temperature due to poor high-temperature characteristics. With respect to the lithium-containing nickel oxide, it has battery characteristics of high discharge capacity, but has disadvantages in that it is difficult to be synthesized by a simple solid-state reaction and its cycle characteristics are low.

Therefore, there is an urgent need to develop a novel cathode active material having better high-temperature stability, lower manufacturing costs, and better cycle characteristics than cathode active materials that have been currently used.

KR 2011-0017253 A discloses a method for preparing a positive electrode active material, the method comprising the steps of: preparing an Mn(CH₃COO)₂ aqueous solution and an Ni(CH₃COO)₂ aqueous solution and then mixing same; adding and dissolving CHCOO₂Li and citric acid into the mixed solution of the previous steps; preparing a sol by adding and stirring ethylene glycol into the mixed solution of the previous step; and coating the sol on the surface of LiMn₂O₄.

KR 2012-0021674 A discloses a method for preparing a positive electrode material for a lithium secondary battery, the method comprising the steps of preparing a mixed solution by mixing a lithium hydroxide aqueous solution and a raw material substance for positive electrode material, adding citric acid and ethylene glycol to the mixed solution, heating same at 130°C for two hours, and then concentrating same by heating at 200°C.

KR 2008-0099131 A1 also discloses a respective method in which Al(NO₃)₃·9H₂O, Al₂(SO₄)₃ or Zr(No₃)₂·5H₂O are used as metal raw material substances.

US 2013/149616 A1 discloses a method of manufacturing a cathode active material coating solution for a secondary battery, the method comprising: preparing a mixed solution by dispersing a metal precursor and a chelating agent in a glycol-based solvent; performing primary heating on the mixed solution; and performing secondary heating on the mixed solution, wherein the glycol-based solvent comprises ethylene glycol, wherein the metal precursor comprises a nitrate, which includes at least aluminum, wherein the chelating agent comprises citric acid, wherein the performing of the primary heating is performed at a temperature of 170°C for 1 hour and wherein the performing of the secondary heating is performed at a temperature of as well 170°C for 5 hours.

WO 2013/064773 A1 discloses a method of manufacturing a cathode active material coating solution for a secondary battery, the method comprising: preparing a mixed solution by dispersing a metal precursor and a chelating agent in glycol-based solvent; performing primary heating on the mixed solution; and performing secondary heating on the mixed solution, wherein the glycol-based solvent comprises ethylene glycol, wherein the metal precursor comprises a nitrate, which includes at least one metal selected from the group consisting of chromium, manganese, nickel, or a mixture of two or more thereof, wherein the chelating agent comprises citric acid, and wherein the performing of the primary heating and the performing of the secondary heating are performed in an inert gas atmosphere.

### DISCLOSURE OF THE INVENTION

### TECHNICAL PROBLEM

An aspect of the present invention provides a method of manufacturing a cathode active material coating solution for a secondary battery which may improve charge and discharge efficiency on the surface of a cathode active material during the preparation of the cathode active material.

Another aspect of the present invention provides a cathode active material coating solution manufactured by the above method.

### TECHNICAL SOLUTION

According to an aspect of the present invention, there is provided a method of manufacturing a cathode active material coating solution for a secondary battery capable of forming a metal oxide coating layer, the method comprising: preparing a mixed solution by dispersing a metal precursor and a chelating agent in a glycol-based solvent;
performing primary heating on the mixed solution wherein the performing of the primary heating is performed in a temperature range of 110° C. to 230° C. for 5 hours to 20 hours; and
performing secondary heating on the mixed solution, wherein the performing of the secondary heating is performed in a temperature range of 170° C. to 250° C. for 1 hour to 5 hours, wherein a temperature of the primary heating is different from that of the secondary heating, and
wherein the coating solution is a metal glycolate coating solution comprising at least one metal organo-compound selected from the group consisting of compounds represented by Chemical Formulae 1 to 3 in which a metal desorbed from a metal precursor, a glycol-based solvent, and a chelating agent are combined:

[Chemical Formula 1] M(C₂H₅SO₂)ₙ

[Chemical Formula 2] M(C₆H₍₈₋ₙ₎O₇)

[Chemical Formula 3] M(C₆H₍₈₋ₙ₎O₇) (C₂H₅O₂)

where M, as the metal desorbed from the metal precursor, represents at least one metal selected from the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), and n is an integer between 1 and 4.

According to another aspect of the present invention, there is provided a cathode active material coating solution for a secondary battery capable of forming a metal oxide coating layer manufactured by the method of claim 1, wherein the coating solution is a metal glycolate coating solution comprising at least one metal organo-compound selected from the group consisting of compounds represented by Chemical Formulae 1 to 3 in which a metal desorbed from a metal precursor, a glycol-based solvent, and a chelating agent are combined:

[Chemical Formula 1] M(C₂H₅O₂) n

[Chemical Formula 2] M(C₆H₍₈₋ₙ₎O₇)

[Chemical Formula 3] M(C₆H₍₈₋ₙ₎O₇) (C₂H₅O₂)

where M, as the metal desorbed from the metal precursor, represents at least one metal selected from the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), and n is an integer between 1 and 4..

The cathode active material coating solution for a secondary battery may be a metal glycolate coating solution.

### ADVANTAGEOUS EFFECTS

In the present invention, a cathode active material coating solution, which may form a metal oxide coating layer having a uniform thickness capable of improving charge and discharge efficiency on the surface of a cathode active material for a secondary battery, may be manufactured by mixing and heating a metal precursor compound and a chelating agent in the presence of a glycol-based solvent.

### BRIEF DESCRIPTION OF THE DRAWINGS

FIG. 1 is a field-emission scanning electron microscope (FE-SEM) image showing the surface of a cathode active material including a metal oxide coating layer prepared according to Example 4 of the present invention;
FIG. 2 is an FE-SEM image showing the surface of a cathode active material including a metal oxide coating layer prepared according to Example 5 of the present invention; and
FIG. 3 is an FE-SEM image showing the surface of a cathode active material including a metal oxide coating layer prepared according to Example 6 of the present invention.

### MODE FOR CARRYING OUT THE INVENTION

Hereinafter, the present invention will be described in detail.

Recently, the need for using a cathode of a lithium ion secondary battery at a high voltage increases, and accordingly, research into methods for preparing a cathode active material having excellent high-temperature stability, low manufacturing costs, excellent capacity, and excellent cycle characteristics has emerged. For example, in order to improve thermal stability and cycle characteristics, a method of coating the surface of a cathode active material with a metal oxide using a typical dry or wet coating method has been proposed. However, since it is difficult to coat the metal oxide to have a uniform thickness by the typical method, the degree of improvement is still insufficient. For example, the dry coating method has advantages in that the process is simple and cost is low, but has disadvantages in that it is difficult to form a metal oxide coating layer having a uniform thickness on the surface of a cathode active material. The wet coating method may form a metal oxide coating layer having a uniform thickness. However, the wet coating method has disadvantages in that anions capable of degrading battery characteristics may not only remain on the surface of the metal oxide coating layer, but it may also be difficult to form (coat) a metal oxide layer having a uniform thickness which may further improve charge and discharge efficiency.

Accordingly, the present invention aims at providing a method of manufacturing a cathode active material coating solution capable of forming a metal oxide coating layer having a uniform thickness which may address limitations of typical coating methods and may simultaneously improve charge and discharge efficiency on the surface of a cathode active material for a secondary battery, and a coating solution manufactured by the above method. In particular, with respect to the coating solution manufactured by the method of the present invention, since anions, which are present in a typical wet coating solvent to degrade battery characteristics, are not included, the charge and discharge efficiency of the cathode may be further improved.

Specifically, according to an embodiment of the present invention, provided is a method of manufacturing a cathode active material coating solution for a secondary battery capable of forming a metal oxide coating layer, the method comprising:
preparing a mixed solution by dispersing a metal precursor and a chelating agent in a glycol-based solvent;
performing primary heating on the mixed solution wherein the performing of the primary heating is performed in a temperature range of 110° C. to 23C° C. for 5 hours to 20 hours; and
performing secondary heating on the mixed solution, wherein the performing of the secondary heating is performed in a temperature range of 170° C. to 250° C. for 1 hour to 5 hours, wherein a temperature of the primary heating is different from that of the secondary heating, and
wherein the coating solution is a metal glycolate coating solution comprising at least one metal organo-compound selected from the group consisting of compounds represented by Chemical Formulae 1 to 3 in which a metal desorbed from a metal precursor, a glycol-based solvent, and a chelating agent are combined:

[Chemical Formula 1] M(C₂H₅O₂)ₙ

[Chemical Formula 2] M(C₆H₍₈₋ₙ₎O₇)

[Chemical Formula 3] M(C₆H₍₈₋ₙ₎O₇) (C₂H₅O₂)

where M, as the metal desorbed from the metal precursor, represents at least one metal selected from the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), and n is an integer between 1 and 4.

First, in the method of the present invention, the glycol-based solvent is a component added to function as a reactant which forms a metal organo-compound by combining (reacting) with a metal descrbed from the metal precursor during a heating process. Typical examples of the glycol-based solvent may include solvents having a boiling point (bp) of 120°C to 400°C, for example, a single material selected from the group consisting of ethylene glycol (bp 197°C), propylene glycol (bp 188°C), diethylene glycol (bp 245°C), triethylene glycol (bp 285°C), and polyethylene glycol, or a mixture of two or more thereof, but the present invention is not particularly limited thereto. In the case that a solvent having a boiling point of less than 120°C is used as the glycol-based solvent, since the binding reaction with the metal desorbed from the metal precursor does not occur, the metal organo-compound may be difficult to be formed.

In this case, in the method of the present invention, the metal precursor is not particularly limited so long as it includes a typical metal, and for example, the metal precursor may include a single material selected form the group consisting of acetate, hydroxide, nitrate, nitride, sulfate, sulfide, alkoxide, and halide, which include at least one metal selected form the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), or a mixture of two or more thereof. Specifically, typical examples of the metal precursor may be aluminum acetate, zirconium nitride, or manganese acetate.

Also, in the method of the present invention, the chelating agent is a component added to facilitate the binding between the glycol-based solvent and the metal by easily desorbing the metal from the metal precursor, and typical examples of the chelating agent may include a single material selected from the group consisting of citric acid, ethylenediaminetetraacetic acid (EDTA), oxalic acid, and gluconic acid, or a mixture of two or more thereof.

Also, in the method of the present invention, a content ratio (parts by weight) of the metal precursor: the glycol-based solvent: the chelating agent may be in a range of 1:1:0.1 to 1:500:20, for example, 1:1:0.1 to 1:100:20.

In the case that the amount of the glycol-based solvent is less than 1 part by weight, the metal desorbed from the metal precursor may not entirely react with the glycol-based solvent to remain in a state of the metal precursor. Also, in the case in which the amount of the glycol-based solvent is greater than 500 parts by weight, since a large amount of the glycol-based solvent not participating in the reaction must be removed by being evaporated during the heating after the reaction, the consumption of energy and the glycol-based solvent may be large and side reactions may occur in a solvent evaporation process. Furthermore, in the case that the amount of the chelating agent is less than 0.1 parts by weight, the effect of the chelating agent may not be sufficiently obtained. In the case in which the amount of the chelating agent is greater than 20 parts by weight, since a large amount of the chelating agent preferentially reacts with the metal precursor to inhibit the reaction between the glycol-based solvent and the metal precursor, a desired yield of the metal organo-compound may be reduced.

Also, in the method of the present invention, an additive may be further included when preparing the mixed solution.

The additive may improve the yield of metal oxide by being included as a catalyst component which promotes the reaction between the metal desorbed from the metal precursor and the glycol-based solvent. The additive may be a component which does not remain later in a coating layer by being entirely evaporated and removed during the heating. Typical examples of the additive may include a single material selected from the group consisting of formaldehyde, acetaldehyde, and glycolic acid, or a mixture of two or more thereof.

The additive may be included in an amount of 0.1 parts by weight to 20 parts by weight based on total 1 part by weight of the metal precursor. In the case that the amount of the additive is greater than 20 parts by weight, there may be a possibility that a large amount of byproducts may be formed due to the occurrence of side reactions.

Specifically, the performing of the primary heating is performed in a temperature range of 110°C to 230°C, for 5 hours to 20 hours. The performing of the primary heating may be performed in which a time at which all metal of the metal precursor react with the glycol-based solvent to form the metal organo-compound is set as a termination point.

A viscosity of the mixed solution after the primary heating may be in a range of about 1 cps (centipoise) to about 1,000 cps, and specifically, the mixed solution may have a viscosity similar to the glycol-based solvent.

Furthermore, in the method of the present invention, the performing of the secondary heating may be immediately performed with no time interval, such as a cooling process, after the primary heating. Specifically, the performing of the secondary heating is performed in a temperature range of 170°C to 250°C, for 1 hour to 5 hours. For example, in the case that ethylene glycol is used as the glycol-based solvent, the performing of the secondary heating may be performed at a temperature of about 180°C or more for 1 hour to 5 hours.

The performing of the secondary heating may be performed until a termination point at which the glycol-based solvent used as a reactant is sufficiently removed to form a metal glycolate solution. Thus, the performing of the secondary heating may be referred to as "heating and concentrating". In this case, the metal glycolate solution may have a viscosity of 1 cps to 15,000 cps, specifically, 200 cps to 5,000 cps, for example, 1,000 cps to 3,000 cps.

In the method of the present invention, the performing of the primary heating and the performing of the secondary heating may be performed in an inert gas atmosphere such as argon (Ar).

In the case that the metal glycolate solution is prepared by the performing of the secondary heating of the present invention, a concentration of the coating solution may be easily adjusted during the preparation of the cathode active material including the metal coating layer, and thus, the effectiveness of coating may be improved by controlling coating conditions according to the concentration of the coating solution.

That is, in the present invention, a glycol-based solvent (e.g., ethylene glycol), a metal precursor, and a chelating agent (e.g., citric acid) are mixed to prepare a mixed solution, and coordination bonds are then formed between oxygen of the glycol-based solvent and the chelating agent and metal ions desorbed from the metal precursor while hydrogen of the glycol-based solvent and the chelating agent is desorbed as in the following reaction formula during heating (concentrating) the mixed solution. As a result, a metal glycolate coating solution including metal organo-compounds represented by the following Chemical Formulae 1 to 3 as main components is obtained while a metal desorbed from the metal precursor, the glycol-based solvent, and the chelating agent are combined together.

[Reaction Formula] 2Mⁿ⁺ + n(C₂H₅O₂)⁻ + (C₆H₍₈₋ₙ₎O₇)ⁿ⁻ → M(C₂H₅O₂)ₙ + M(C₆H₍₈₋ₙ₎O₇)

[Chemical Formula 1] M(C₂H₅O₂)ₙ

[Chemical Formula 2] M(C₆H₍₈₋ₙ₎O₇)

[Chemical Formula 3] M(C₆H₍₈₋ₙ₎O₇) (C₂H₅O₂)

(where M, as the metal desorbed from the metal precursor, represents at least one metal selected from the group consisting of Mg, Ca, Sr, Ba, Y, Ti, Zr, V, Nb, Ta, Cr, Mo, W, Mn, Fe, Co, Ir, Ni, Zn, Al, Ga, In, Si, Ge, Sn, La, and Ce, and n is an integer between 1 and 4.)

Also, according to another embodiment of the present invention, a metal glycolate coating solution including a metal organo-compound, which is prepared by the above method, i.e., a cathode active material coating solution, is provided. Specifically, the present invention may provide a metal glycolate coating solution including at least one metal organo-compound selected from the group consisting of metal organo-compounds represented by the following Chemical Formulae 1 to 3 in which a metal desorbed from a metal precursor, a glycol-based solvent, and a chelating agent are combined.

[Chemical Formula 1] M(C₂H₅O₂)ₙ

[Chemical Formula 2] M(C₆H₍₈₋ₙ₎O₇)

[Chemical Formula 3] M(C₆H₍₈₋ₙ₎O₇) (C₂H₅O₂)

(where M, as the metal desorbed from the metal precursor, represents at least one metal selected from the group consisting of Mg, Ca, Sr, Ba, Y, Ti, Zr, V, Nb, Ta, Cr, Mo, W, Mn, Fe, Co, Ir, Ni, Zn, Al, Ga, In, Si, Ge, Sn, La, and Ce, and n is an integer between 1 and 4.)

Since the cathode active material coating solution manufactured by the method of the present invention may include two or more metal organo-compounds represented by Chemical Formulae 1 to 3, the surface of the cathode active material may be coated with two or more metal oxide layers having a uniform thickness. Furthermore, with respect to the cathode active material coating solution of the present invention, since anions present in a typical wet coating solvent are not included, various metal oxide coating layers may be formed while minimizing the effect of the anions which may degrade battery characteristics on the surface of the cathode active material.

Also, provided is a cathode active material for a secondary battery in which a metal oxide coating layer having a uniform thickness is formed using the metal glycolate coating solution of the present invention.

In this case, the metal glycolate coating solution of the present invention is diluted in an organic solvent and the metal oxide coating layer may then be formed by mixing with a cathode active material using a typical wet mixing method.

In this case, the cathode active material is not particularly limited so long as it may be used in a typical lithium secondary battery, and for example, any one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-y}Co_{y}O₂, LiCo_{1-y}Mn_{y}O₂, LiNi_{1-y}Mn_{y}O₂(0≤y≤1), Li(NiₐMn_{b}Co_{c})O₄(0<a<2, 0<b<2, 0<c<2, a+b-c=2), LiMn_{2-z}Ni_{z}O₄, LiMn_{2-z}Co_{z}O₄(0<z<2) , LiCoPO₄, and LiFePO₄, or a mixture of two or more thereof may be used. Also, sulfide, selenide, and halide may be used in addition to the above oxides.

Furthermore, provided is a cathode for a secondary battery including a cathode collector and a cathode active material for a secondary battery, in which the surface thereof is coated with the coating solution, coated on the cathode collector.

In general, the cathode collector is fabricated to have a thickness of about 3 µm to about 500 µm. The cathode collector is not particularly limited so long as it has high conductivity without causing adverse chemical changes in the batteries. The cathode collector may be formed of, for example, stainless steel, aluminum, nickel, titanium, fired carbon, or aluminum or stainless steel that is surface-treated with one of carbon, nickel, titanium, silver, or the like. The collector may have an uneven surface to improve the bonding strength of a cathode active material and may have any of various shapes such as that of a film, a sheet, a foil, a net, a porous body, a foam body, a non-woven fabric body, and the like.

Also, a lithium secondary battery composed of the cathode including the cathode active material, an anode, a separator, and a lithium salt-containing non-aqueous electrolyte solution is provided.

The anode, for example, is prepared by coating an anode collector with an anode material including an anode active material and then drying the anode collector. If necessary, components, such as a conductive agent, a binder, and a filler, may be included in the anode material.

The anode collector is generally fabricated to have a thickness of about 3 µm to about 500 µm. The anode collector is not particularly limited so long as it has conductivity without causing adverse chemical changes in the batteries. The anode collector may be formed of, for example, copper, stainless steel, aluminum, nickel, titanium, fired carbon, copper or stainless steel that is surface-treated with one of carbon, nickel, titanium, silver, or the like, an aluminum-cadmium alloy, or the like. Also, like the cathode collector, the anode collector may have a fine roughness surface to improve bonding strength with an anode active material. The anode collector may have various shapes such as a film, a sheet, a foil, a net, a porous body, a foam body, a non-woven fabric body, and the like.

The separator is disposed between the cathode and the anode, and a thin insulating film having high ion permeability and mechanical strength is used. The separator typically has a pore diameter of 0.01 µm to 10 µm and a thickness of 5 µm to 300 µm.

For example, sheets or non-woven fabrics formed of an olefin-based polymer such as polypropylene; glass fibers or polyethylene, which have chemical resistance and hydrophobicity, are used as the separator. When a solid electrolyte, such as a polymer, is used as an electrolyte, the solid electrolyte may also serve as the separator.

The lithium salt-containing non-aqueous electrolyte solution is formed of an electrolyte and a lithium salt, and a non-aqueous organic solvent or an organic solid electrolyte may be used as the electrolyte solution.

Examples of the non-aqueous organic solvent may include aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxyfuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Examples of the organic solid electrolyte may include a polyethylene derivative, a polyethylene oxide derivative, a polypropylene oxide derivative, a phosphate ester polymer, poly agitation lysine, polyester sulfide, polyvinyl alcohol, polyvinylidene fluoride, and a polymer containing an ionic dissociation group.

The lithium salt is a material that is readily soluble in the non-aqueous electrolyte and for example, may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imide.

Also, in order to improve charge/discharge characteristics and flame retardancy, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, and aluminum trichloride, for example, may be added to the electrolyte solution. In some cases, halogen-containing solvents, such as carbon tetrachloride and ethylene trifluoride, may be further included in order to impart incombustibility, and carbon dioxide gas may be further included in order to improve high-temperature storage characteristics.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Examples

### (Example 1. Preparation of Cathode Active Material Coating Solution)

20 g of aluminum acetate (Al(C₂H₃O₂₎₃) and 20 g of citric acid (C₆H₈O₇) were dispersed in 200 g of an ethylene glycol (C₂H₆O₂) solution and then stirred to prepare a mixed solution. The mixed solution was primarily heated with stirring at a temperature of 141°C for 5 hours and then secondarily heated at a temperature of 180°C for 1 hour until the mixed solution was concentrated (about 1,000 cps) to manufacture a cathode active material coating solution (1) including metal organo-compounds represented by the following Chemical Formulae 1a and 2a as main components.

[Chemical Formula 1a] Al(C₂H₅O₂)₃

[Chemical Formula 2a] Al(C₆H₅O₇)

### (Example 2. Preparation of Cathode Active Material Coating Solution)

40 g of zirconium nitride (ZrN) and 10 g of citric acid (C₆H₈O₇) were dispersed in 200 g of an ethylene glycol (C₂H₆O₂) solution and then stirred to prepare a mixed solution. The mixed solution was primarily heated with stirring at a temperature of 150°C for 5 hours and then secondarily heated at a temperature of 180°C for 1 hour until the mixed solution was concentrated (about 1,000 cps) to manufacture a cathode active material coating solution (2) including metal organo-compounds represented by the following Chemical Formulae 1b and 3a as main components.

[Chemical Formula 1b] Zr(C₂H₅O₂)₄

[Chemical Formula 3a] Zr(C₆H₅O₇)(C₂H₅O₂)

### (Example 3. Preparation of Cathode Active Material Coating Solution)

70 g of manganese acetate (Mn(CH₃O₂)₂), 20 g of citric acid (C₆H₈O₇), and 5 g of formaldehyde were dispersed in 400 g of an ethylene glycol (C₂H₆O₂) solution and then stirred to prepare a mixed solution. The mixed solution was primarily heated with stirring at a temperature of 140°C for 4 hours and then secondarily heated at a temperature of 180°C for 1 hour until the mixed solution was concentrated (about 1,000 cps) to manufacture a cathode active material coating solution (3) including metal organo-compounds represented by the following Chemical Formulae 1c and 2c as main components.

[Chemical Formula 1c] Mn(C₂H₅O₂)ₙ

[Chemical Formula 2c] Mn(C₆H₅O₇)

(where m is an integer between 1 and 3.)

### (Example 4. Preparation of Cathode Active Material Including Metal Oxide Coating Layer)

While adding 2 g of the cathode active material coating solution of Chemical Formula 1 manufactured in Example 1 to 8 g of ethanol and stirring, 50 g of a cathode active material (LiNi_{0.6}Mn_{0.2}Co_{0.2}O₂) was added thereto and stirred in a paste state. The stirred paste was dried at 180°C for 2 hours and then heat-treated at 800°C in air for 1 hour to prepare cathode active material particles coated with about 0.2 wt% of an aluminum oxide layer.

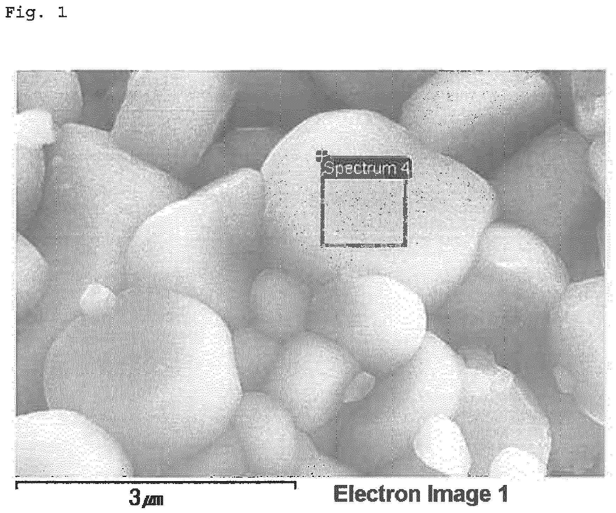

The results of field-emission scanning electron microscope (FE-SEM) and energy dispersive spectrometer (EDS) analysis of the surface of the prepared cathode active material are presented in Table 1 below (see FIG. 1).

**[Table 1]**

| Element | Wt% |
|---|---|
| Al | 0.49 |
| Ni | 28.6 |
| Mn | 9.92 |
| Co | 9.84 |
| O | 51.15 |
| Total | 100 |

Referring to FIG. 1, amounts of elements in a portion marked as "spectrum 4" in an FE-SEM image were analyzed by EDS. As a result, it may be understood that cathode materials of Ni, Mn, and Co were present in the form of an oxide and the amount of Al as a coating material was analyzed to be 0.49 wt%. Furthermore, it may be confirmed that the surface of the cathode active material was very clean in the FE-SEM image, and thus, it may be understood that Al was very uniformly coated.

### (Example 5. Preparation of Cathode Active Material Including Metal Oxide Coating Layer)

While adding 2 g of the cathode active material coating solution manufactured in Example 2 to 8 g of ethanol and stirring, 50 g of a cathode active material (LiNi_{0.6}Mn_{0.2}Co_{0.2}O₂) was added thereto and stirred in a paste state. The stirred paste was dried at 180°C for 2 hours and then heat-treated at 500°C in air for 1 hour to prepare cathode active material particles coated with about 0.2 wt% of a zirconium oxide layer.

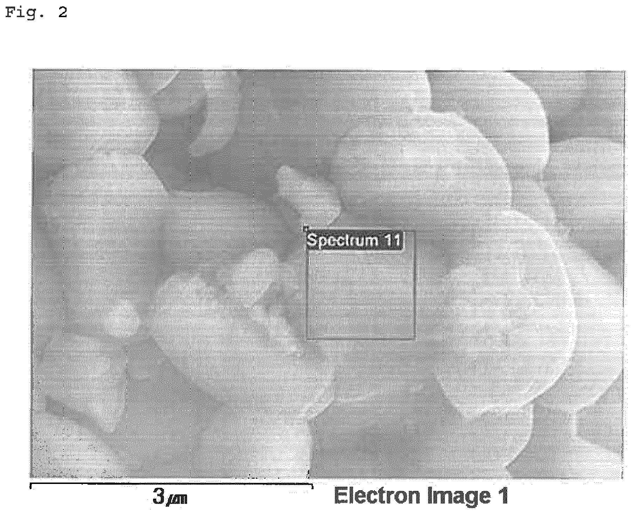

The results of FE-SEM and EDS analysis of the surface of the prepared cathode active material are presented in Table 2 below (see FIG. 2).

**[Table 2]**

| Element | Wt% |
|---|---|
| Zr | 0.72 |
| Ni | 32.50 |
| Mn | 10.82 |
| Co | 10.99 |
| O | 44.97 |
| Total | 100 |

Referring to FIG. 2, amounts of elements in a portion marked as "spectrum 11" in an FE-SEM image were analyzed by EDS. As a result, it may be understood that cathode materials of Ni, Mn, and Co were present in the form of an oxide and the amount of Zr as a coating material was analyzed to be 0.72 wt%. Furthermore, it may be confirmed that the surface of the cathode active material was very clean in the FE-SEM image, and thus, it may be understood that Zr was very uniformly coated.

### (Example 6. Preparation of Cathode Active Material Including Metal Oxide Coating Layer)

While adding 2 g of the cathode active material coating solution manufactured in Example 3 to 8 g of ethanol and stirring, 50 g of a cathode active material (LiNi_{0.6}Mn_{0.2}Co_{0.2}O₂) was added thereto and stirred in a paste state. The stirred paste was dried at 180°C for 2 hours and then heat-treated at 700°C in air for 1 hour to prepare cathode active material particles coated with about 0.2 wt% of a manganese oxide layer.

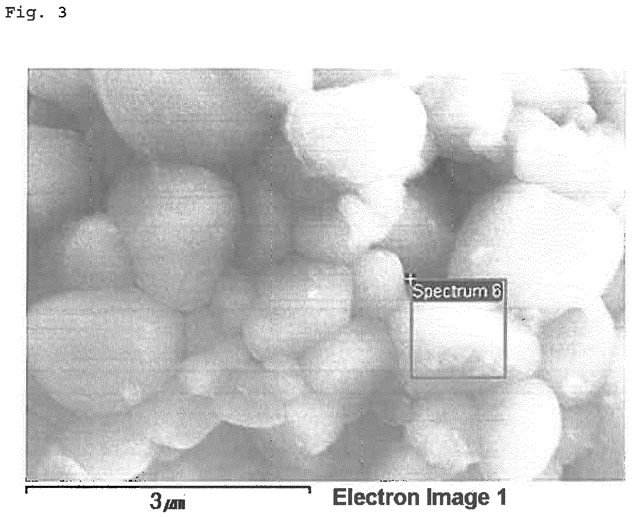

The results of FE-SEM and EDS analysis of the surface of the prepared cathode active material are presented in Table 3 below (see FIG. 3).

**[Table 3]**

| Element | Wt% |
|---|---|
| Ni | 46.51 |
| Mn | 11.61 |
| Co | 10.46 |
| O | 31.42 |
| Total | 100 |

Referring to FIG. 3, amounts of elements in a portion marked as "spectrum 6" in an FE-SEM image were analyzed by EDS. As a result, it may be understood that cathode materials of Ni, Mn, and Co were present in the form of an oxide and the amount of Mn as a coating material was analyzed to be 11.61 wt%. Thus, when compared with 10.45 wt% of Co, it may be understood that about 1 wt% of Mn was coated by the Mn coating. Furthermore, it may be confirmed that the surface of the cathode active material was very clean in the FE-SEM image, and thus, it may be understood that Mn was very uniformly coated.

## Claims

1. A method of manufacturing a cathode active material coating solution for a secondary battery capable of forming a metal oxide coating layer, the method comprising:
preparing a mixed solution by dispersing a metal precursor and a chelating agent in a glycol-based solvent;
performing primary heating on the mixed solution, wherein the performing of the primary heating is performed in a temperature range of 110° C. to 230° C. for 5 hours to 20 hours; and
performing secondary heating on the mixed solution, wherein the performing of the secondary heating is performed in a temperature range of 170° C. to 250° C. for 1 hour to 5 hours,
wherein a temperature of the primary heating is different from that of the secondary heating, and
wherein the coating solution is a metal glycolate coating solution comprising at least one metal organo-compound selected from the group consisting of compounds represented by Chemical Formulae 1 to 3 in which a metal desorbed from a metal precursor, a glycol-based solvent, and a chelating agent are combined:
[Chemical Formula 1] M(C₂H₅O₂)ₙ
[Chemical Formula 2] M(C₆H₍₈₋ₙ₎O₇)
[Chemical Formula 3] M(C₆H₍₈₋ₙ₎O₇)(C₂H₅O₂)
where M, as the metal desorbed from the metal precursor, represents at least one metal selected from the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), and n is an integer between 1 and 4.

2. The method of claim 1, wherein the glycol-based solvent comprises a single material selected from the group consisting of ethylene glycol, propylene glycol, diethylene glycol, triethylene glycol, and polyethylene glycol, or a mixture of two or more thereof.

3. The method of claim 1, wherein the metal precursor comprises a single material selected form the group consisting of acetate, hydroxide, nitrate, nitride, sulfate, sulfide, alkoxide, and halide, which include at least one metal selected form the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), or a mixture of two or more thereof.

4. The method of claim 3, wherein the metal precursor is aluminum acetate, zirconium nitride, or manganese acetate.

5. The method of claim 1, wherein the chelating agent comprises a single material selected from the group consisting of citric acid, ethylenediaminetetraacetic acid (EDTA), oxalic acid, and gluconic acid, or a mixture of two or more thereof.

6. The method of claim 1, wherein a content ratio (parts by weight) of the metal precursor: the glycol-based solvent: the chelating agent is in a range of 1:1:0.1 to 1:500:20.

7. The method of claim 1, further comprising an additive during the preparation of the mixed solution.

8. The method of claim 7, wherein the additive comprises a single material selected from the group consisting of formaldehyde, acetaldehyde, and glycolic acid, or a mixture of two or more thereof.

9. The method of claim 7, wherein the additive is included in an amount of 0.1 parts by weight to 20 parts by weight based on total 1 part by weight of the metal precursor.

10. The method of claim 1, wherein the performing of the primary heating and the performing of the secondary heating are performed in an inert gas atmosphere.

11. A cathode active material coating solution for a secondary battery capable of forming a metal oxide coating layer manufactured by the method of claim 1, wherein the coating solution is a metal glycolate coating solution comprising at least one metal organo-compound selected from the group consisting of compounds represented by Chemical Formulae 1 to 3 in which a metal desorbed from a metal precursor, a glycol-based solvent, and a chelating agent are combined:
[Chemical Formula 1] M(C₂H₅O₂)ₙ
[Chemical Formula 2] M(C₆H₍₈₋ₙ₎O₇)
[Chemical Formula 3] M(C₆H(₈₋ₙ)O₇)(C₂H₅O₂)
where M, as the metal desorbed from the metal precursor, represents at least one metal selected from the group consisting of magnesium (Mg), calcium (Ca), strontium (Sr), barium (Ba), yttrium (Y), titanium (Ti), zirconium (Zr), vanadium (V), niobium (Nb), tantalum (Ta), chromium (Cr), molybdenum (Mo), tungsten (W), manganese (Mn), iron (Fe), cobalt (Co), iridium (Ir), nickel (Ni), zinc (Zn), aluminum (Al), gallium (Ga), indium (In), silicon (Si), germanium (Ge), tin (Sn), lanthanum (La), and cerium (Ce), and n is an integer between 1 and 4.

## Patentansprüche

1. Verfahren zum Herstellen einer Kathodenaktivmaterialbeschichtungslösung für eine Sekundärbatterie, die in der Lage ist zum Bilden einer Metalloxidbeschichtungsschicht, wobei das Verfahren umfasst:
Herstellen einer gemischten Lösung durch Dispergieren einer Metallvorstufe und eines Chelatierungsmittels in einem Lösungsmittel auf Glykolbasis;
Durchführen eines primären Erwärmens der gemischten Lösung, wobei das Durchführen des primären Erwärmens in einem Temperaturbereich von 110°C bis 230°C für 5 Stunden bis 20 Stunden durchgeführt wird; und
Durchführen eines sekundären Erwärmens der gemischten Lösung, wobei das Durchführen des sekundären Erwärmens in einem Temperaturbereich von 170°C bis 250°C für 1 Stunde bis 5 Stunden durchgeführt wird,
wobei eine Temperatur des primären Erwärmens von derjenigen des sekundären Erwärmens verschieden ist, und
wobei die Beschichtungslösung eine Metallglykolatbeschichtungslösung ist, umfassend wenigstens eine Metallorganoverbindung, ausgewählt aus der Gruppe bestehend aus Verbindungen, die durch chemische Formeln 1 bis 3 dargestellt sind, in denen ein Metall, das von einer Metallvorstufe desorbiert ist, ein Lösungsmittel auf Glykolbasis und ein Chelatierungsmittel kombiniert sind:
[Chemische Formel 1] M(C₂H₅O₂)ₙ
[Chemische Formel 2] M(C₆H₍₈₋ₙ₎O₇)
[Chemische Formel 3] M(C₆H₍₈₋ₙ₎O₇)(C₂H₅O₂),
wobei M, als das von der Metallvorstufe desorbierte Metall, wenigstens ein Metall darstellt, ausgewählt aus der Gruppe bestehend aus Magnesium (Mg), Calcium (Ca), Strontium (Sr), Barium (Ba), Yttrium (Y), Titan (Ti), Zirconium (Zr), Vanadium (V), Niob (Nb), Tantal (Ta), Chrom (Cr), Molybdän (Mo), Wolfram (W), Mangan (Mn), Eisen (Fe), Cobalt (Co), Iridium (Ir), Nickel (Ni), Zink (Zn), Aluminium (Al), Gallium (Ga), Indium (In), Silicon (Si), Germanium (Ge), Zinn (Sn), Lanthan (La) und Cer (Ce), und n eine ganze Zahl zwischen 1 und 4 ist.

2. Verfahren nach Anspruch 1, wobei das Lösungsmittel auf Glykolbasis ein einzelnes Material umfasst, ausgewählt aus der Gruppe bestehend aus Ethylenglykol, Propylenglykol, Diethylenglykol, Triethylenglykol und Polyethylenglykol oder einer Mischung aus zwei oder mehreren derselben.

3. Verfahren nach Anspruch 1, wobei die Metallvorstufe ein einzelnes Material umfasst, ausgewählt aus der Gruppe bestehend aus Acetat, Hydroxid, Nitrat, Nitrid, Sulfat, Sulfid, Alkoxid und Halogenid, welche wenigstens ein Metall einschließen, ausgewählt aus der Gruppe bestehend aus Magnesium (Mg), Calcium (Ca), Strontium (Sr), Barium (Ba), Yttrium (Y), Titan (Ti), Zirconium (Zr), Vanadium (V), Niob (Nb), Tantal (Ta), Chrom (Cr), Molybdän (Mo), Wolfram (W), Mangan (Mn), Eisen (Fe), Cobalt (Co), Iridium (Ir), Nickel (Ni), Zink (Zn), Aluminium (Al), Gallium (Ga), Indium (In), Silicon (Si), Germanium (Ge), Zinn (Sn), Lanthan (La) und Cer (Ce) oder einer Mischung aus zwei oder mehreren derselben.

4. Verfahren nach Anspruch 3, wobei die Metallvorstufe Aluminiumacetat, Zirconiumnitrid oder Manganacetat ist.

5. Verfahren nach Anspruch 1, wobei das Chelatierungsmittel ein einzelnes Material umfasst, ausgewählt aus der Gruppe bestehend Citronensäure, Ethylendiamintetraessigsäure (EDTA), Oxalsäure und Gluconsäure oder einer Mischung aus zwei oder mehreren derselben.

6. Verfahren nach Anspruch 1, wobei ein Gehaltsverhältnis (Gewichtsteile) der Metallvorstufe : des Lösungsmittels auf Glykolbasis : des Chelatierungsmittels in einem Bereich von 1 : 1 : 0,1 bis 1:500 : 20 ist.

7. Verfahren nach Anspruch 1, weiter umfassend ein Additiv während der Herstellung der gemischten Lösung.

8. Verfahren nach Anspruch 7, wobei das Additiv ein einzelnes Material umfasst, ausgewählt aus der Gruppe bestehend aus Formaldehyd, Acetaldehyd und Glykolsäure oder einer Mischung aus zwei oder mehreren derselben.

9. Verfahren nach Anspruch 7, wobei das Additiv in einer Menge von 0,1 Gewichtsteilen bis 20 Gewichtsteilen, basierend auf insgesamt 1 Gewichtsteil der Metallvorstufe, eingeschlossen ist.

10. Verfahren nach Anspruch 1, wobei das Durchführen des primären Erwärmens und das Durchführen des sekundären Erwärmens in einer Inertgasatmosphäre durchgeführt werden.

11. Kathodenaktivmaterialbeschichtungslösung für eine Sekundärbatterie, die in der Lage ist zum Bilden einer Metalloxidbeschichtungsschicht, hergestellt durch das Verfahren nach Anspruch 1, wobei die Beschichtungslösung eine Metallglykolatbeschichtungslösung ist, umfassend wenigstens eine Metallorganoverbindung, ausgewählt aus der Gruppe bestehend aus Verbindungen, die durch chemische Formeln 1 bis 3 dargestellt sind, in denen ein Metall, das von einer Metallvorstufe desorbiert ist, ein Lösungsmittel auf Glykolbasis und ein Chelatierungsmittel kombiniert sind:
[Chemische Formel 1] M(C₂H₅O₂)ₙ
[Chemische Formel 2] M(C₆H₍₈₋ₙ₎O₇)
[Chemische Formel 3] M(C₆H₍₈₋ₙ₎O₇)(C₂H₅O₂),
wobei M, als das von der Metallvorstufe desorbierte Metall, wenigstens ein Metall darstellt, ausgewählt aus der Gruppe bestehend aus Magnesium (Mg), Calcium (Ca), Strontium (Sr), Barium (Ba), Yttrium (Y), Titan (Ti), Zirconium (Zr), Vanadium (V), Niob (Nb), Tantal (Ta), Chrom (Cr), Molybdän (Mo), Wolfram (W), Mangan (Mn), Eisen (Fe), Cobalt (Co), Iridium (Ir), Nickel (Ni), Zink (Zn), Aluminium (Al), Gallium (Ga), Indium (In), Silicon (Si), Germanium (Ge), Zinn (Sn), Lanthan (La) und Cer (Ce), und n eine ganze Zahl zwischen 1 und 4 ist.

## Revendications

1. Procédé de fabrication d'une solution de revêtement d'un matériau cathodique actif pour accumulateur capable de former une couche de revêtement d'un oxyde métallique, le procédé comprenant :
la préparation d'une solution mixte par dispersion d'un précurseur métallique et d'un agent chélateur dans un solvant à base d'un glycol ;
la réalisation d'un chauffage primaire de la solution mixte, où la réalisation du chauffage primaire est effectuée à une température dans la plage qui va de 110 °C à 230 °C pendant 5 heures à 20 heures ; et la réalisation du chauffage secondaire de la solution mixte, où la réalisation d'un chauffage secondaire est effectuée à une température dans la plage qui va de 170 °C à 250 °C pendant 1 heure à 5 heures,
où une température du chauffage primaire est différente de celle du chauffage secondaire et où la solution de revêtement est une solution de revêtement d'un glycolate métallique comprenant au moins un composé organo-métallique sélectionné dans le groupe consistant en des composés représentés par les Formules chimiques 1 à 3, dans laquelle un métal désorbé à partir d'un précurseur métallique, un solvant à base d'un glycol et un agent chélateur sont combinés :
[Formule chimique 1] M(C₂H₅O₂)ₙ
[Formule chimique 2] M(C₆H₍₈₋ₙ₎O₇)
[Formule chimique 3] M(C₆H₍₈₋ₙ₎O₇)(C₂H₅O₂)
où M, qui représente le métal désorbé à partir d'un précurseur métallique, est un au moins métal sélectionné dans le groupe consistant en les suivants : magnésium (Mg), calcium (Ca), strontium (Sr), baryum (Ba), yttrium (Y), titane (Ti), zirconium (Zr), vanadium (V), niobium (Nb), tantale (Ta), chrome (Cr), molybdène (Mo), tungstène (W), manganèse (Mn), fer (Fe), cobalt (Co), iridium (Ir), nickel (Ni), zinc (Zn), aluminum (Al), gallium (Ga), indium (In), silicium (Si), germanium (Ge), étain (Sn), lanthane (La) et cérium (Ce), et n est un nombre entier entre 1 et 4.

2. Procédé de la revendication 1, où le solvant à base d'un glycol comprend un matériau unique sélectionné dans le groupe consistant en l'éthylène glycol, le propylène glycol, le diéthylène glycol, le triéthylène glycol et le polyéthylène glycol ou un mélange de deux ou plusieurs de ceux-ci.

3. Procédé de la revendication 1, où le précurseur métallique comprend un matériau unique sélectionné dans le groupe consistant en un acétate, un hydroxyde, un nitrate, un nitrure, un sulfate, un sulfure, un alkoxyde et un halogénure qui inclut un au moins métal sélectionné dans le groupe consistant en les suivants : magnésium (Mg), calcium (Ca), strontium (Sr), baryum (Ba), yttrium (Y), titane (Ti), zirconium (Zr), vanadium (V), niobium (Nb), tantale (Ta), chrome (Cr), molybdène(Mo), tungstène (W), manganèse (Mn), fer (Fe), cobalt (Co), iridium (Ir), nickel (Ni), zinc (Zn), aluminum (Al), gallium (Ga), indium (In), silicium (Si), germanium (Ge), étain (Sn), lanthane (La) et cérium (Ce), ou un mélange de deux ou plusieurs de ceux-ci.

4. Procédé de la revendication 3, où le précurseur métallique est l'acétate d'aluminum, le nitrure de zirconium ou l'acétate de manganèse.

5. Procédé de la revendication 1, où l'agent chélateur comprend un matériau unique sélectionné dans le groupe consistant en l'acide citrique, l'acide éthylène diamine tétraacétique (EDTA), l'acide oxalique et l'acide gluconique ou un mélange de deux ou plusieurs de ceux-ci.

6. Procédé de la revendication 1, où un rapport en teneurs (parties en poids) en précurseur métallique : solvant à base d'un glycol : agent chélateur est dans une plage qui va de 1:1:0,1 à 1:500:20.

7. Procédé de la revendication 1 comprenant en outre un additif pendant la préparation de la solution mixte.

8. Procédé de la revendication 7, où l'additif comprend un matériau unique sélectionné dans le groupe consistant en le formaldéhyde, l'acétaldéhyde et l'acide glycolique ou un mélange de deux ou plusieurs de ceux-ci.

9. Procédé de la revendication 7, où l'additif est inclus à une quantité qui va de 0,1 partie en poids à 20 parties en poids pour un total de 1 partie en poids du précurseur métallique.

10. Procédé de la revendication 1, où la réalisation du chauffage primaire et la réalisation du chauffage secondaire sont effectuées dans une atmosphère gazeuse inerte.

11. Solution de revêtement d'un matériau cathodique actif pour accumulateur capable de former une couche de revêtement d'un oxyde métallique fabriquée conformément au procédé de la revendication 1, où la solution de revêtement est une solution de revêtement d'un glycolate métallique comprenant au moins un composé organo-métallique sélectionné dans le groupe consistant en des composés représentés par les Formules chimiques 1 à 3, dans laquelle un métal désorbé à partir d'un précurseur métallique, un solvant à base d'un glycol et un agent chélateur sont combinés :
[Formule chimique 1] M(C₂H₅O₂)ₙ
[Formule chimique 2] M(C₆H₍₈₋ₙ₎O₇)
[Formule chimique 3] M(C₆H₍₈₋ₙ₎O₇)(C₂H₅O₂)
où M, qui représente le métal désorbé à partir d'un précurseur métallique, est un au moins métal sélectionné dans le groupe consistant en les suivants : magnésium (Mg), calcium (Ca), strontium (Sr), baryum (Ba), yttrium (Y), titane (Ti), zirconium (Zr), vanadium (V), niobium (Nb), tantale (Ta), chrome (Cr), molybdène (Mo), tungstène (W), manganèse (Mn), fer (Fe), cobalt (Co), iridium (Ir), nickel (Ni), zinc (Zn), aluminum (Al), gallium (Ga), indium (In), silicium (Si), germanium (Ge), étain (Sn), lanthane (La) et cérium (Ce), et n est un nombre entier entre 1 et 4.
